# EUROPEAN PATENT APPLICATION

(11) **EP 0 579 890 A1**
(43) Date of publication of application: **26.01.1994**
(21) Application number: 92830399.9
(22) Date of filing: 21.07.1992
(51) Int. Cl.: B25D 17/24, F16F 1/36

(54) **A cushion tool-stop for a demolisher hammer**

(71) Applicant: OFFICINE GIORDANO S.r.l., I-70032 Bitonto (Bari) (IT)
(72) Inventor: Tribuzio, Giovanni, Bitonto (Bari) (IT)
(74) Representative: Adorno, Silvano

(57) **Abstract**

The cushioned tool-stop comprises two elongated metal members (1) having inserted therebetween a cushioning member (2) of resilient material which is fastened to said metal members either integrally or by means of welded pins (3) or stud screws engaged alternately in the pair of metal members and embedded in the resilient intermediate cushioning member. The pair of metal members (1) are directly hit by the striking mass whose force is taken up and dampened by the resilient cushioning member (2) in those cases when the demolisher hammer bit or chisel does not meet any resistance by a material to be demolished.

## Description

This invention concerns in general percussion hammers or hammer-drills and, in particular, those auxiliary members generally called tool-stops.

As it is known, in demolisher hammers, percussion hammers, hammer-drills, hammer-picks and so on, and in corresponding machines, work is performed by a striking mass which transmits its kinetic energy to the operating tool (for instance a chisel) whose end normally contacts the material to be drilled or demolished, like for instance concrete, masonry or rock, which material receives the tool blowing force and is subjected to the crushing effects thereof.

On the contrary, when the tool bit is no longer in contact with the material to be demolished, like for instance after a through hole in a wall has been finished, or else when the hammer or the demolishing machine are momentarily moved away from the material, while continuing to operate, the blowing force of the striking mass and of the chisel can no longer be absorbed by the material, whereby the kinetic energy relieves itself within the tool and generates percussions likely to cause upsettings and internal deformations of the operating head. In order to cushion and to take up the kinetic energy in the event of the so called "blank blows", an interchangeable member is usually provided, which is called tool-stop, whose task is to take up directly the blows of the moving masses.

Therefore, the purpose of the tool-stops, usually provided in pairs, is to prevent the bit or chisel of the demolisher tool from coming out while the blank blows are struck, whereby the tool unhindered by any obstacle, is shot outwards and it strikes the tool-stops which receive the whole energy of the blow. This energy tends to plastically deform both the tool-stop and the seat of the tool stop in the bit and it is not unusual that the tool-stop breaks up in a number of pieces. This problem causes a number of serious inconveniences during use of the demolisher, in particular when the material gets upset within the drill seat in that, in order to be able to take out said damaged bit, it is necessary to disassemble the whole chisel housing and to use an hydraulic jack for pushing out the jammed bit.

On the contrary, with the tool-stop of this invention, this occurrence is avoided, therefore maintenance runs may be delayed in time.

This invention will be described in more detail in the following, referring to the attached drawing, wherein:
Figure 1 is a schematic perspective view of the tool stop according to this invention;
Figure 2 is a vertical longitudinal sectional view of the tool-stop of Figure 1, and
Figure 3 is a cross-sectional view taken along line III-III of Figure 2.

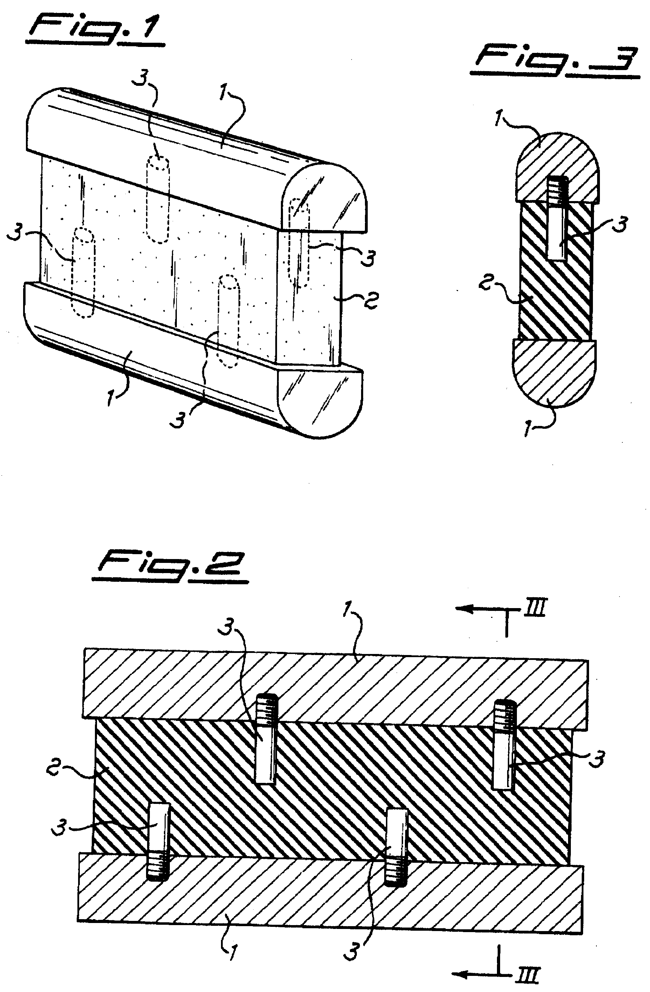

As it is shown in the drawing, the tool-stop according to this invention comprises two semicylindrical symmetrical metal portions 1, a rectangularly shaped intermediate body 2 of resilient material, as well as few threaded pins or screws 3 which are engaged, at one end thereof, within special threads in the semicylindrical portions 1, and embedded, with their remaining portion, within intermediate body 2. In order to make the blow energy to uniformly spread on the tool-stop, said pins 3 are uniformly spaced in the longitudinal direction, and they are alternatively fastened to the pair of semi-cylindrical portions 1, as it is shown in Figure 2. After the pairs of pins 3 have been fastened to the respective metal portions 1, resilient body 2 is interposed between said two metal portions 1 and, through a press action, the protruding portions of pins 1 are driven through intermediate body 2 which, owing to its resiliency tightly clamps said pins and keeps solidly fastened the pair of semicylindrical portions 1.

Metal portions 1 are made of nickel-chrome-molybdenum alloy steel, case hardened with double quenching, while the resilient intermediate body is made of cured rubber for instance adiprene or the like, by means of a die-casting process. The seats for the ends of pins 3, in general four of them, are provided by threaded holes running through semicylindrical portions 1, and the fastening of pins 3 through metal portions 1 may be performed by welding, as an alternative or in addition to the threading engagement.

When the demolisher tool is in operation, the tool-stops of this invention are subjected to pulsating forces up to 1000 tons. In addition to the advantages provided by the longer useful life of the demolisher tools which are not permanently deformed by the possible blank blows, use of the tool-stops according to this invention provides a certain weight and noise level reduction for said demolisher tool.

While this invention has been shown and described herein based on a particular embodiment thereof, it is understood that variations and/or modifications may be made thereto without exceeding the scope of protection thereof. In particular, it will be possible to renounce the welded pins or the fastening screws, by integrally fastening intermediate resilient cushioning member 2 to metal portions 1 by die-casting and vulcanizing, in order to obtain an integral body.

## Claims

1. A tool-stop for demolisher tools or apparatus, characterized by including a cushioning member (2) interposed between two metal portions (1) provided to directly take up violent blows for dampening the kinetic energy of a percussion tool.

2. The tool-stop of claim 1, characterized in that said cushining member (2) comprises a cured rubber resilient body interposed and fastened between the flat surfaces of said metal portions (1) which comprise semicylindrical bars.

3. The tool-stop of claim 2, characterized in that said resilient rectangularly shaped intermediate body (2) is fastened to said semicylindrical metal portions (1) by means of metal pins (3), uniformly spaced and alternately received in blind holes of said metal portions (1).

4. The tool-stop of claim 2, characterized in that the fastening of said resilient intermediate body (2) to said semicylindrical metal portions (1) is performed by die-casting/vulcanizing in order to obtain an integral body (1, 2).
